# EUROPÄISCHE PATENTSCHRIFT

(11) **EP 2 620 052 B1**
(45) Veröffentlichungstag und Bekanntmachung des Hinweises auf die Patenterteilung: **13.08.2014**
(21) Anmeldenummer: 12000565.7
(22) Anmeldetag: 30.01.2012
(51) Int. Cl.: A01D 46/24

(54) **Erntebehälter**
Harvested good container
Conteneur de récolte

(43) Veröffentlichungstag der Anmeldung: 31.07.2013
(73) Patentinhaber: Windegger Walter & Co. KG-Sas, 39011 Lana (BZ) (IT)
(72) Erfinder: Windegger, Walter Alois, 39011 Lana (BZ) (IT)
(74) Vertreter: Oberosler, Ludwig

(56) Entgegenhaltungen:
- CH-A- 316 302
- DE-C- 919 269
- FR-A1- 2 457 632
- US-A- 1 482 203

## Beschreibung

Die Erfindung bezieht sich auf eine Erntevorrichtung welche wesentlich aus einem starrem Behälter mit aufklappbarem Boden besteht um das Ernten von Früchten zu erleichtern welche in größeren Transportkisten abgelegt werden welche ihrerseits meistens durch selbstfahrende Erntewagen transportiert werden. Ein Erntebehälter nach dem Oberbegriff von Anspruch 1 ist z.B. aus US 1 482 203 bekannt.

Es ist die Verwendung starrer Erntebehälter bekannt welche mittels Schulterriemen getragen werden. Diese Erntebehälter haben für die Ernte von Äpfeln, Birnen oder Pfirsichen, in modernen Anlagen mit eher engen Abständen zwischen den Baumreihen und mit relativ niedrigen Bäumen, breite Anwendung gefunden. Mittels dieser Behälter ist es möglich den Großteil der Früchte vom Boden aus und von den beweglichen Arbeitsflächen der selbstfahrenden Erntewägen aus zu ernten. Die Bedienungsperson mit dem umgehängten Erntebehälter trägt, während der Fortbewegungen längs der Baumreihen am Boden, bzw. auf den Arbeitsflächen des Erntefahrzeuges, das Gewicht der geernteten Früchte bis der Behälter gefüllt ist. Sobald der Erntebehälter voll ist nähert sich die Bedienungsperson der Transportkiste um, in Abhängigkeit des Standes der geernteten Früchte innerhalb der Transportkiste, den Erntebehälter über den oberen Rand der Transportkiste anzuheben, sich über den Rand zu beugen und den Erntebehälter im Inneren der Transportkiste mit dem Boden auf den Boden der Transportkiste, bzw. auf die enthaltenen Früchte zu legen um anschließend den Boden des Erntebehälters zu öffnen und den Inhalt zu entleeren ohne die Früchte dabei zu beschädigen indem er den Erntebehälter langsam anhebt. Es hängt also von der Erfahrung, von der Sorge und vom gesunden Menschenverstand der Bedienungsperson ab, ob die Früchte während des Entleerens des Erntebehälters beschädigt werden. Meistens arbeitet jedoch das Erntepersonal in Akkord und die Entleerung der Erntebehälter erfolgt nicht mit der nötigen Sorgfalt. Weiters lastet das Gewicht der im Erntebehälter abgelegten Früchte bis zur vollständigen Füllung dauernd auf der Bedienungsperson. Weiters ist das Anheben des vollen Erntebehälters über den Rand der Transportkiste und das Absenken des Behälters bis auf den Boden der Transportkiste oder auf das Niveau der Früchte innerhalb der Kiste, ermüdend.

Die Erfindung stellt sich die Aufgabe die Erntearbeit und das Überbringen der geernteten Früchte in die Transportkiste weniger ermüdend zu gestalten und dabei auch die Früchte schonender zu behandeln.

Zur Lösung dieser Aufgabe schlägt die Erfindung eine Erntevorrichtung vor welche aus einem starren Behälter mit aufklappbarem Boden besteht bei welchem der Mechanismus für das Schließen und das Öffnen des Bodens über zwei Handhaben betätigt wird, welche mit einer Verlängerung für das Einhängen am oberen Rand der Transportkiste oder an einem Geländer oder einem Handlauf eines Erntewagens, ausgestattet sind. Der Boden des Erntebehälters ist in zugeklappter Position gesichert solange der Erntebehälter z.B. am Rand der Transportkiste eingehängt ist und an der Innenfläche oder an der Außenfläche der Transportkiste anliegt; in diesem Zustand ist der Erntebehälter bereit um die fortlaufend gepflückten Früchte aufzunehmen. Die gepflückten Früchte werden vorzugsweise direkt im eingehängten Erntebehälter abgelegt, auf diese Weise muss die Bedienungsperson nicht zu hohe Lasten tragen und sich nicht über den Rand der Transportkiste beugen und sich nicht nach unten beugen um den Erntebehälter am Boden der Transportkiste oder auf den in diesem enthaltenen Früchten abzulegen. Sobald der Erntebehälter mit Früchten gefüllt ist ergreift die Bedienungsperson die seitlichen Handhaben, hebt den Erntebehälter leicht an um ihn auszuhängen und ihn anschließend abzusenken und auf dem Kistenboden oder den darin bereits enthaltenen Früchten abzulegen. Durch Loslassen der Handhaben und Anheben des Erntebehälters an eigens dafür vorgesehenen, Flügeln welche fest mit dem Erntebehälter verbunden sind und von diesem, unterhalb der beweglichen abgesenkter Stellung sich befindenden Handhaben, abstehen, öffnet sich der Boden des Erntebehälters wodurch die Früchte nach unten entweichen können und sich am Boden der Transportkiste, bzw. auf den in der Kiste bereits vorhandenen Früchten ablegen.

Natürlich sind die Innenflächen des Erntebehälters und die Innen- und Außenflächen des aufklappbaren Bodens gepolstert. Der erfindungsgemäße Erntebehälter hat eine ausgeschmiegte Form, wobei der Querschnitt entsprechend dem oberen Rand kleiner ist als jener entsprechend dem unteren Rand mit aufklappbarem Boden. Der aufklappbare Boden besteht aus zwei Paneelen welche an den beiden längeren unteren Rändern des Behälters scharnierartig befestigt sind, diese Paneele sind seitlich mit Zugschnüren versehen welche an den seitlichen Handhaben befestigt sind und ihrerseits an zwei zueinander parallelen vertikalen Rundstäben verschiebbar sind, welche direkt oder mittels Vorsprünge und/oder Tragplatten, außen an den kleineren sich gegenüberliegenden Außenwänden des Erntebehälters befestigt sind.

Die Erfindung schließt nicht aus dass, um die obere Position der Handgriffe zu sichern, unabhängig vom Einhängen dieser am oberen Rand der Transportkiste, an jedem der Handhaben oder am oberen Rand des Erntebehälters oder an der Halterung der vertikalen parallelen Rundstäbe, ein Einhäng- oder Einschnappelement vorgesehen ist. In diesem Fall kann der mit Traggurt ausgestattete Erntebehälter von der Bedienungsperson getragen werden.

Die Erfindung wird anschließend anhand eines, in den beigelegten Zeichnungen schematisch dargestellten, vorzuziehenden Ausführungsbeispiels eines erfindungsgemäßen Erntebehälters näher erklärt, dabei erfüllen die Zeichnungen rein erklärenden, nicht begrenzenden Zweck.

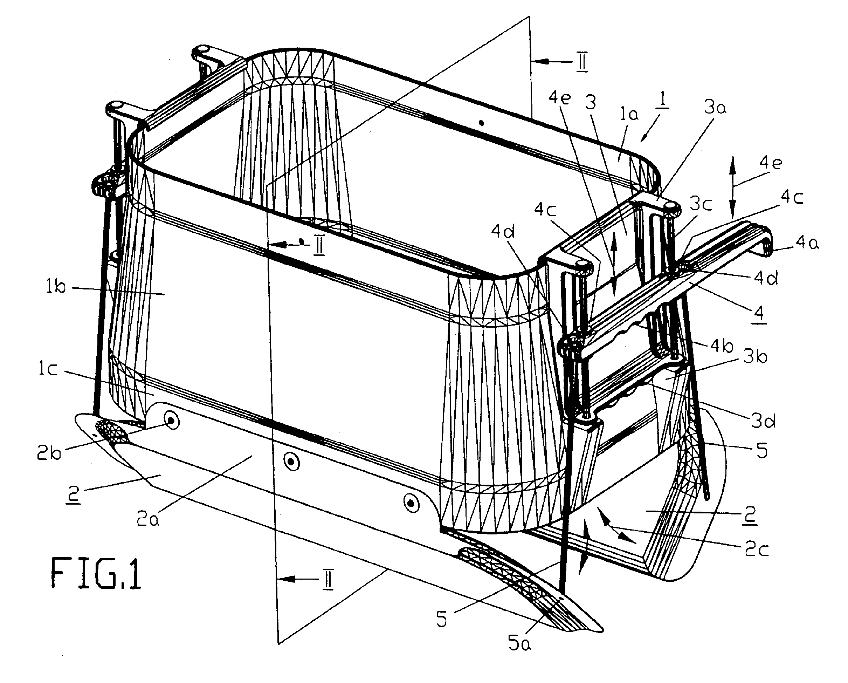

Die Fig. 1 zeigt eine perspektivischer Darstellung eines erfindungsgemäßen Erntebehälters mit teilweise aufgeklapptem Boden.

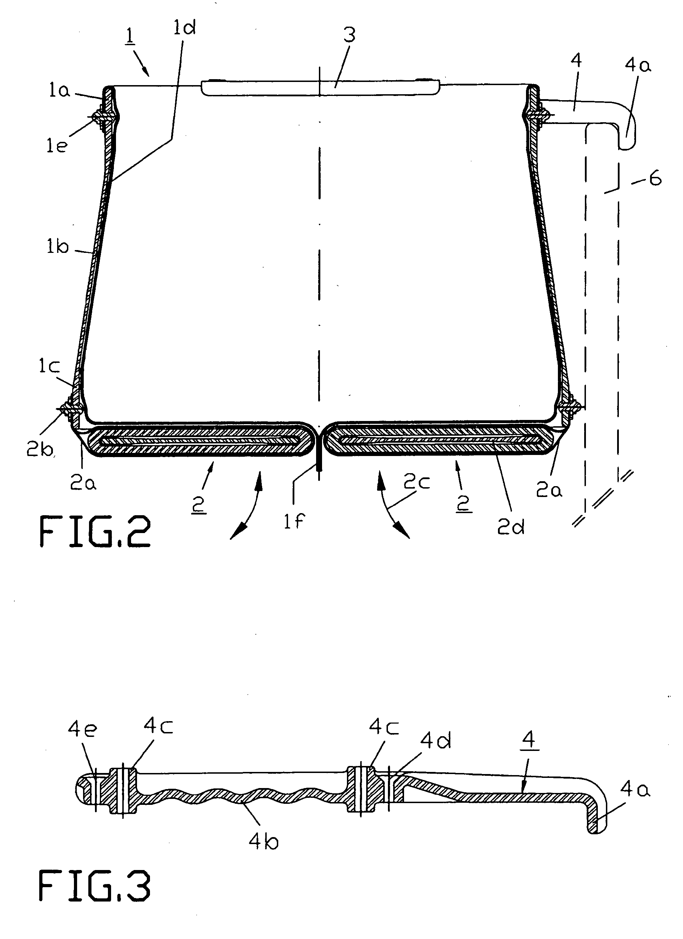

Die Fig. 2 zeigt einen Querschnitt gemäß der in Fig. 1 gezeigten Schnittebene II-II durch einen erfindungsgemäßen Erntebehälter.

Die Fig. 3 zeigt einen Längsschnitt durch eine in Fig. 1 gezeigte Handhabe zur Betätigung des Bodens des Erntebehälters.

Der Erntebehälter für Obst besteht wesentlich aus einem starren Behälter 1, aus zwei beweglichen 2c Klappen 2 welche den aufklappbaren Boden des Behälters bilden, aus vertikalen Rundstäben 3c und aus seitlichen Handhaben 4 zur Betätigung der Klappen 2 und zum Einhängen des Erntebehälters z.B. am oberen Rand einer Transportkiste 6.

Der starre Behälter 1 besteht aus einem oberen, wesentlich vertikalen, Rand 1 a, aus einem Mittelteil 1b und aus einem unteren vertikalen Rand 1c. Der Querschnitt des Behälters welcher vom oberen Rand 1 a umschlossen wird ist kleiner als jener welcher vom unteren Rand 1c umschlossen wird, sodass der mittlere Teil 1 b des Behälters 1 welcher wesentlich die Seitenwände des Behälters bildet ausgeschmiegt geformt ist um dadurch zu hohen Druck zwischen den enthaltenen Früchten, bzw. zwischen diesen und den Seitenwänden des Behälters 1, insbesondere während der Entleerung des Behälters, zu vermeiden und das Entweichen der Früchte zu begünstigen. Diese ausgeschmiegte Form verleiht, zusammen mit den beiden vertikalen Rändern 1a, 1c, dem Behälter 1 eine beachtliche Formstabilität. An den langen Seiten des unteren Randes 1c sind die Klappen 2 mittels Streifen 2a scharnierartig, z B mittels Nieten 2b verbunden. Diese Klappen 2 bestehen aus einem inneren Paneel 2d aus steifem Werkstoff welches mit weichem Werkstoff umhüllt ist und von einem Laminat oder Gewebe abgedeckt ist welches an einer der Längsseiten den Streifen 2a für die scharnierartige Befestigung bildet.

An den kleineren Seitenwänden des Behälters 1 sind jeweils zwei, zueinander parallele, vertikale Rundstäbe 3c vorgesehen welche von einem Halterungselement 3 getragen werden, welches außen am Behälter 1 anliegt und am oberen Rand eingehängt ist während es unten auf Vorsprünge 3b aufliegt. Aus dem besagten Element 3 ragen zwei Paare von Trägern 3a ab welche eine vertikale Bohrung für die vertikalen Rundstäbe 3c aufweisen. An den besagten Rundstäben 3c sind Handhaben 4 vertikal verschiebbar 4e geführt, diese sind mit Gleitbuchsen 4c mit einer Grifffläche 4b und mit Aufhängansätzen 4a versehen. Die Handhaben 4 weisen durchgehende vertikale Bohrungen 4d auf an welchen die mit Knoten versehenen oberen Enden der Zugschnüre 5 gehalten werden, wobei das jeweils entgegengesetzte untere Ende 5a seitlich an den entsprechenden Bodenklappen 2 befestigt ist.

Die Innenwände des Behälters sind vorzugsweise gepolstert und von einem elastischen Laminat oder einem Gewebe 1d abgedeckt, dabei können die Ränder des Gewebes, bei zugeklappten Bodenklappen 2, über die entsprechenden Ränder der Bodenklappen 2 vorstehen 1f.

Wird der erfindungsgemäße Erntebehälter 1 an den Handhaben 4 im Bereich der Griffflächen 4b ergriffen und angehoben, so gleiten diese nach oben 4e wodurch die Bodenklappen 2 zugeklappt 2c werden; in diesem Zustand wird der Erntebehälter mittels der Aufhängansätze 4a, z.B. am oberen Rand der Transportkiste 6 so eingehängt, dass der Erntebehälter 1 innen oder außen an der Kistenwand anliegt. In dieser Stellung ist der Erntebehälter bereit um fortlaufend mit Früchten befüllt zu werden ohne dass die Bedienungsperson das Gewicht des Erntebehälters tragen muss und ohne dass er sich, zwecks Entleerung des Behälters, über den Rand der Transportkiste nach unten neigen muss.

Sobald der Erntebehälter gefüllt ist wird er an den Griffflächen 4b der Handhaben 4 ergriffen und leicht angehoben um ausgehängt zu werden; während dieser Handlungen bleiben die Bodenklappen 2 immer zugeklappt. Anschließend wird der Erntebehälter mit den Bodenklappen 2 auf den Boden der Transportkiste oder auf die darin enthaltenen Früchte abgesenkt; durch folgendes Ergreifen und Hochheben des Erntebehälters 1 an den abstehenden Flügeln 3d welche mit dem Behälter fest verbunden sind, können sich die Bodenklappen frei, unter Wirkung des Gewichtes der sich im Behälter befindenden Früchte, öffnen 2c; die Früchte können schonend entweichen und sich am Boden der Transportkiste oder auf den darin bereits sich befindenden Früchten, ablegen.

Die Erfindung schließt nicht aus, dass zwischen der Handhabe 4 und dem Behälter 1 ein Einhäng- oder ein Arretierelement vorgesehen ist so dass die Handhaben 4 in ihrer oberen Position und die Bodenklappen in ihrer zugeklappten Position blockiert werden können. In diesem Fall kann der erfindungsgemäße Erntebehälter mit einem Traggurt versehen sein welche eventuell an den Handhaben 4 befestigt ist damit der Erntebehälter auf bekannte Art benützt werden kann.

## Patentansprüche

1. Erntebehälter bestehend aus einem starren Behälter (1) mit aufklappbarem Boden welcher über Zugschnüre (5) welche an den, den Boden des Behälters bildenden Klappen (2) befestigt sind, betätigt wird, **dadurch gekennzeichnet, dass** die Zugschnüre (5) durch zwei Handhaben (4) betätigt werden von denen jede entlang Rundstäben (3c) gleitend (4e) gelagert ist welche vertikal und zueinander parallel an den kleineren Seitenwänden des Behälters (1) befestigt sind und dass jede dieser Handhaben (4) einen Aufhängansatz (4a) aufweist mittels welchem der Behälter am oberen Rand einer Transportkiste (6) oder an einer Erntemaschine aufgehängt werden kann, wobei in der Aufhängeposition der Verschluss der Bodenklappen (2) sichergestellt ist.

2. Erntebehälter gemäß Anspruch 1, **dadurch gekennzeichnet, dass** der Behälter (1) eine ausgeschmiegte Form hat, wobei der untere horizontale Querschnitt welcher der Bodenöffnung mit den Bodenklappen (2) entspricht, größer ist als der obere Querschnitt welcher der Befüllungsöffnung entspricht.

3. Erntebehälter gemäß Anspruch 1, **dadurch gekennzeichnet, dass** die Bodenklappen (2) schwenkbar (2c) an der jeweils längeren Seite des unteren Randes des Behälters (1) mittels eines Streifens (2a) des flexiblen Gewebes oder Laminates, welches die Bodenklappen (2) vollständig umhüllt, mittels eines Filmscharniers oder mittels Scharnierbänder angelenkt ist.

4. Erntebehälter gemäß Anspruch 1, **dadurch gekennzeichnet dass** die vertikalen Rundstäbe (3c) von Elementen (3) getragen werden welche aus der Seitenwand des Behälters (1) selbst abstehen und am Behälter angebracht sind, oder von Elementen (3) getragen werden welche jeweils ein Paar von Rundstäben (3c) tragen und seitlich am Behälter angebracht sind und dass diese Elemente für die Befestigung der vertikalen Rundstäbe (3c), oder die entsprechende Seitenwand des Behälters (1), mit einem Flügel (3d) ausgestattet sind welcher wesentlich parallel zur entsprechenden Handhabe (4) absteht und zwar in einer Position knapp unterhalb der abgesenkten Position der Handhabe.

5. Erntebehälter gemäß Anspruch 1, **dadurch gekennzeichnet dass** die Handhaben (4) für die Betätigung der Bodenklappen (2) und für das Einhängen mit zwei Gleitbuchsen (4c) und mit zwei durchgehenden Bohrungen (4d) oder Befestigungselementen ausgestattet sind an welchen die oberen Enden der Betätigungsschnüre (5) befestigt sind.

6. Erntebehälter gemäß Anspruch 1, **dadurch gekennzeichnet, dass** an den zwei Handhaben (4) die Enden eines Traggurtes befestigt sind.

7. Erntebehälter gemäß Anspruch 1, **dadurch gekennzeichnet, dass** die Handhaben (4), der Behälter (1) oder die Elemente (3) welche die vertikalen Rundstäbe (3c) tragen, mit Einhäng- oder Einschnappelementen versehen sind um die Handhaben (4) in der oberen Position welche die zugeklappte Position der Bodenklappen (2) bestimmt, zu sichern.

## Claims

1. Harvested-good container composed of a rigid container (1) having a flap-open base which is operated via pull cords (5) which are fastened on the flaps (2) which form the base of the container, **characterized in that** the pull cords (5) are operated by two handling means (4) of which each is mounted (4e) in a sliding manner along rods (3c) which are fastened vertically and parallel to one another on the minor side walls of the container (1) and **in that** each of these handling means (4) has an attachment appendage (4a) by means of which the container can be attached so as to hang from the upper edge of a transport container (6) or from a harvesting machine, wherein, in the attachment position, the closure of the base flaps (2) is ensured.

2. Harvested-good container according to Claim 1, **characterized in that** the container (1) has sculpted shape, wherein the lower horizontal cross section which corresponds to the base opening having the base flaps (2) is larger than the upper cross section which corresponds to the filling opening.

3. Harvested-good container according to Claim 1, **characterized in that** the base flaps (2) are pivotably (2c) articulated on the in each case longer side of the lower edge of the container (1) by means of a strip (2a) of the flexible fabric or laminate which completely covers the base flaps (2), by means of an integral hinge or by means of hinge strips.

4. Harvested-good container according to Claim 1, **characterized in that** the vertical rods (3c) are supported by elements (3) which project from the side wall of the actual container (1) and which are attached on the container or are supported by elements (3) which in each case support one pair of rods (3c) and which are laterally attached on the container and **in that**, for the fastening of the vertical rods (3c), said elements or the corresponding side wall of the container (1) are equipped with a wing (3d) which projects substantially parallel to the corresponding handling means (4), specifically in a position which is barely below the lowered position of the handling means.

5. Harvested-good container according to Claim 1, **characterized in that** the handling means (4), for operating the base flaps (2) and for mounting, are equipped with two sliding bushes (4c) and with two through-bores (4d) or fastening elements, on which the upper ends of the operating cords (5) are fastened.

6. Harvested-good container according to Claim 1, **characterized in that** the ends of a carrying strap are fastened on the two handling means (4).

7. Harvested-good container according to Claim 1, **characterized in that**, for securing the handling means (4) in the upper position which defines the flap-closed position of the base flaps (2), the handling means (4), the container (1), or the elements (3) which support the vertical rods (3c) are equipped with mounting elements or snap-in elements.

## Revendications

1. Conteneur de récolte composé d'un conteneur fixe (1) et d'un fond ouvrable activé par des cordons de tirage (5) fixés aux abattants (2) constituant le fond du conteneur, **caractérisé en ce que** les cordons de tirage sont activés par l'intermédiaire de deux manettes (4), chacune étant montée de manière à coulisser (4e) le long de barres rondes (3c) fixée verticalement et parallèlement l'une à l'autre sur les plus petites parois latérales du conteneur (1), et **en ce que** chacune de ces manettes (4) présente une pièce de suspension (4a) permettant de suspendre le conteneur sur le bord supérieur d'une caisse de transport (6) ou d'une machine de récolte, la fermeture des abattants (2) constituant le fond étant sécurisée en position suspendue.

2. Conteneur de récolte selon la revendication 1, **caractérisé en ce que** le conteneur (1) présente une forme ébrasée, la section horizontale inférieure correspondant à l'ouverture des abattants (2) constituant le fond étant plus grande que la section supérieure correspondant à l'ouverture de remplissage.

3. Conteneur de récolte selon la revendication 1, **caractérisé en ce que** les abattants (2) constituant le fond sont pivotants (2c) sur chaque côté le plus long du bord inférieur du conteneur (1) et sont articulés au moyen d'une bande (2a) de tissu ou de laminé flexible entourant complètement les abattants (2) constituant le fond, au moyen d'une charnière film ou au moyen de bandes charnières.

4. Conteneur de récolte selon la revendication 1, **caractérisé en ce que** les barres rondes verticales (3c) sont portées par des éléments (3) sortant eux-mêmes de la paroi latérale du conteneur (1) et montées sur le conteneur, ou par des éléments (3) portant chacun une paire de barres rondes (3c) et étant montés latéralement par rapport au conteneur, et **en ce que** ces éléments pour la fixation des barres rondes verticales (3c), ou la paroi latérale correspondante du conteneur (1), sont munis d'un panneau (3d) étant pour l'essentiel parallèle à la manette correspondante (4), à savoir dans une position se trouvant juste en dessous de la position abaissée de la manette.

5. Conteneur de récolte selon la revendication 1, **caractérisé en ce que** les manettes (4) destinées d'une part à actionner les abattants (2) constituant le fond et d'autre part à la suspension sont équipées de deux manchons coulissants (4c) et de deux alésages (4d) traversant, ou d'éléments de fixation auxquels sont fixés les deux extrémités supérieures des cordons de tirage (5).

6. Conteneur de récolte selon la revendication 1, **caractérisé en ce que** les extrémités d'une sangle sont fixées sur les deux manettes (4).

7. Conteneur de récolte selon la revendication 1, **caractérisé en ce que** les manettes (4), le conteneur (1) ou les éléments (3) portant les barres rondes verticales (3c) sont munies d'éléments de suspension ou encliquetables destinés à sécuriser les manettes (4) en position supérieure, cette position déterminant la position fermée des abattants (2) constituant le fond.
